# EUROPEAN PATENT SPECIFICATION

(11) **EP 3 259 825 B1**
(45) Date of publication and mention of the grant of the patent: **27.03.2019**
(21) Application number: 16706075.5
(22) Date of filing: 02.02.2016
(51) Int. Cl.: H01M 10/42, H02J 7/00

(54) **HETEROGENEOUS BATTERY CELL SWITCHING**
SCHALTUNG VON HETEROGENEN BATTERIEZELLEN
COMMUTATION DE CELLULES D'ACCUMULATEUR HÉTÉROGÈNES

(30) Priority: 19.02.2015 US 201514626518
(43) Date of publication of application: 27.12.2017
(73) Proprietor: Microsoft Technology Licensing, LLC, Redmond, Washington 98052-6399 (US)
(72) Inventor: HUANG, Bojun, Redmond, Washington 98052-6399 (US); HU, Pan, Redmond, Washington 98052-6399 (US); FERRESE, Anthony John, Redmond, Washington 98052-6399 (US); SKIANI, Evangelia, Redmond, Washington 98052-6399 (US); PRIYANTHA, Nissanka Arachchige Bodhi, Redmond, Washington 98052-6399 (US); CHANDRA, Ranveer, Redmond, Washington 98052-6399 (US); BADAM, Anirudh, Redmond, Washington 98052-6399 (US); HODGES, Stephen E., Redmond, Washington 98052-6399 (US); MEINERSHAGEN, Julia L., Redmond, Washington 98052-6399 (US); MOSCIBRODA, Thomas, Redmond, Washington 98052-6399 (US); DUTRA, Jon, Redmond, Washington 98052-6399 (US)
(74) Representative: CMS Cameron McKenna Nabarro Olswang LLP
(86) International application number: PCT/US2016/016033
(87) International publication number: WO 2016/133687

(56) References cited:
- WO-A2-2007/127788
- WO-A2-2011/127251

## Description

### BACKGROUND

Mobile computing devices have been developed to increase the functionality that is made available to users in a mobile setting. For example, a user may interact with a mobile phone, tablet computer, or other mobile computing device to check email, surf the web, compose texts, interact with applications, and so on. One challenge that faces developers of mobile computing devices is efficient power management and extension of battery life. For example, extended processing of tasks by processors at or near capacity may drain the device battery and create thermal conditions that may force shutdown of the device. Various power management strategies may be applied to control processor and battery utilization generally at the expense of overall device performance. If power management implemented for a device fails to strike a good balance between performance and battery life, user dissatisfaction with the device and manufacturer may result.
WO 2011/127251 discloses a large-scale reconfigurable battery system for electric vehicles. The battery system comprises a plurality of battery cells that are interconnected via a plurality of switches. Control units configure the switches to form different circuit arrangements. During operation, the control unit for a given battery circuit monitors an operational state (e.g. state of charge (SOC) and voltage) of the battery cell in the battery circuit and controls the switches in the battery circuit in accordance with the operation state. In the event of a battery cell failure a semantic bypassing mechanism configures battery connectivity in accordance with a policy. In a constant-voltage-keeping policy the supply voltage is kept constant over the battery lifetime as possible in spite of the battery failure. A dynamic-voltage allowing policy supports as many applications as required and improves the maximum deliverable power, given available battery cells, at the expense of a voltage drop that corresponds to a single battery-cell voltage.

### SUMMARY

According to aspects of the present invention there is provided a method, device and system as defined in the accompanying claims
Heterogeneous battery cell switching techniques are described for a device having a battery system with heterogeneous battery cells. A control system is provided that is configured to implement a policy for switching a load for the device between the heterogeneous battery cells. The switching may involve selecting between multiple different modes supported by the device based on an assessment of an operational context for the device. Modes available for a heterogeneous battery cell system may include but are not limited to; different modes to connect one of the multiple heterogeneous battery cells at a time to service the load, rapidly switch among the multiple heterogeneous battery cells to service the load using by drawing a percentage of the overall load from each cell, and/or simultaneously draw a set amount of current from each of the multiple heterogeneous battery cells to service the load.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

Fig. 1 illustrates an example operating environment in accordance with one or more implementations.
Fig. 2 is diagram depicting example details of a computing device having a battery system with heterogeneous battery cells in accordance with one or more implementations.
Fig. 3 is diagram depicting example an arrangement of a battery system having multiple battery cells in accordance with one or more implementations.
Fig. 4 is diagram depicting details of a system having heterogeneous battery cells in accordance with one or more implementations.
Fig. 5 is a flow diagram that describes details of an example procedure for switching of heterogeneous battery cells in accordance with one or more implementations.
Fig. 6 is a flow diagram that describes details of an example procedure for controlling operation of switching hardware of a battery system in accordance with one or more implementations.
Fig. 7 is a flow diagram that describes details of an example procedure for enforcement of a switching policy in accordance with one or more implementations.
Fig. 8 is a block diagram of a system that can be employed for heterogeneous cell switching in accordance with one or more implementations.

### DETAILED DESCRIPTION

### Overview

Generally, devices may implement power management strategies to control processor and battery utilization and thermal conditions, but power management decisions may adversely affect device performance. Accordingly, users of a device may become frustrated if power management is poorly implemented and causes performance to suffer.

Heterogeneous battery cell switching techniques are described for a device having a battery system with heterogeneous battery cells. The heterogeneous battery cells may include cells having various different characteristics such as batteries of different sizes, capacities, battery technologies, chemistries, shapes, state of charge (SOC) and so forth. A control system is provided that is configured to implement a policy for switching a load for the device between the multiple heterogeneous battery cells. The switching may involve selecting between multiple different modes for the battery system supported by the device based on an assessment of an operational context for the device. The assessment may be based upon factors including but not limited to battery characteristics, charge states, actual and expected loads, device applications and system resources being used, and so forth. Different modes may be mapped to different combinations of factors indicative of the operational context for the device. Responsive to recognizing a particular operational context for a device, a corresponding mode is identified and switching hardware of the battery system is directed to cause a switch to the identified mode for servicing of the load. Modes available for a multiple heterogeneous battery cell system may include but are not limited to different modes to connect one of the multiple heterogeneous battery cells at a time to service the load, rapidly switch among the multiple heterogeneous battery cells to service the load by drawing a percentage of the overall load from each cell, and/or draw a set amount of current from each of the multiple heterogeneous battery cells to service the load.

Heterogeneous battery cell switching techniques described herein enable efficient distribution of a power workload between a diverse set of heterogeneous battery cells. Additionally, power usage is optimized by intelligently switching between different cells, using cells efficiently, and/or selecting underutilized cells to balance the load. Rather than merely using a single battery or cells of the same kind, combinations of cells having different characteristics are provided and mapped to different scenarios such that the combination of battery cells employed to service the load in a given scenario is tailored to the operational context, which further improves, power usage, battery life, and overall device performance.

In the discussion that follows, a section titled "Operating Environment" is provided and describes one example environment in which one or more implementations can be employed. Following this, a section titled "Heterogeneous Battery Cell Switching Details" describes example details and procedures in accordance with one or more implementations. Last, a section titled "Example System" describes example computing systems, components, and devices that can be utilized for one or more implementations of heterogeneous battery cell switching.

### Operating Environment

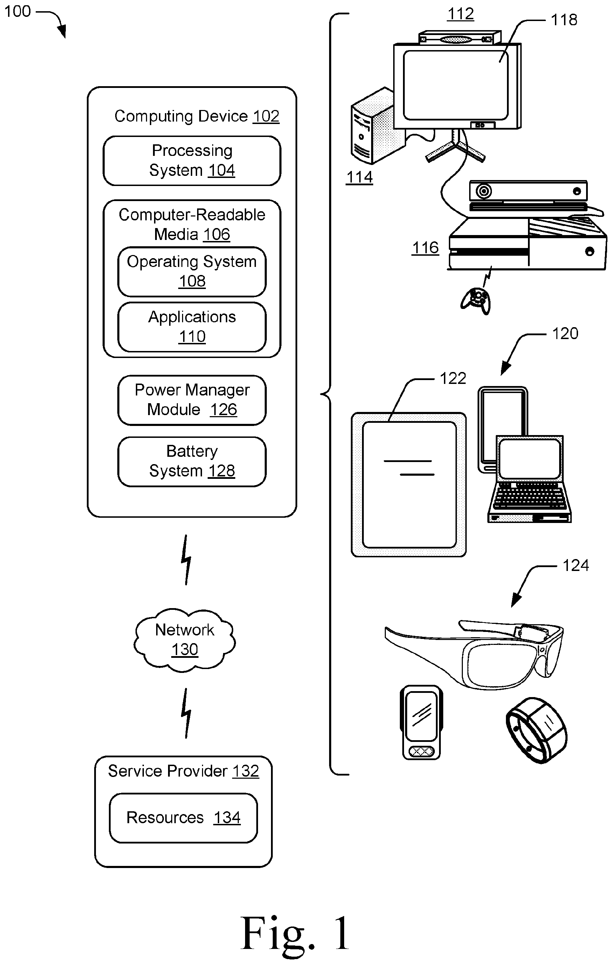

Fig. 1 illustrates an operating environment in accordance with one or more embodiments, generally at 100. The environment 100 includes a computing device 102 having a processing system 104 with one or more processors and devices (e.g., CPUs, GPUs, microcontrollers, hardware elements, fixed logic devices, etc.), one or more computer-readable media 106, an operating system 108, and one or more applications 110 that reside on the computer-readable media and which are executable by the processing system. The processing system 104 may be configured to include multiple independent processors configured in parallel or in series and one or more multi-core processing units. A multi-core processing unit may have two or more processors ("cores") included on the same chip or integrated circuit. In one or more implementations, the processing system 104 may include multiple processing cores that provide a range of performance capabilities, processing efficiencies, and power usage characteristics.

The processing system 104 may retrieve and execute computer-program instructions from applications 110 to provide a wide range of functionality to the computing device 102, including but not limited to gaming, office productivity, email, media management, printing, networking, web-browsing, and so forth. A variety of data and program files related to the applications 110 can also be included, examples of which include games files, office documents, multimedia files, emails, data files, web pages, user profile and/or preference data, and so forth.

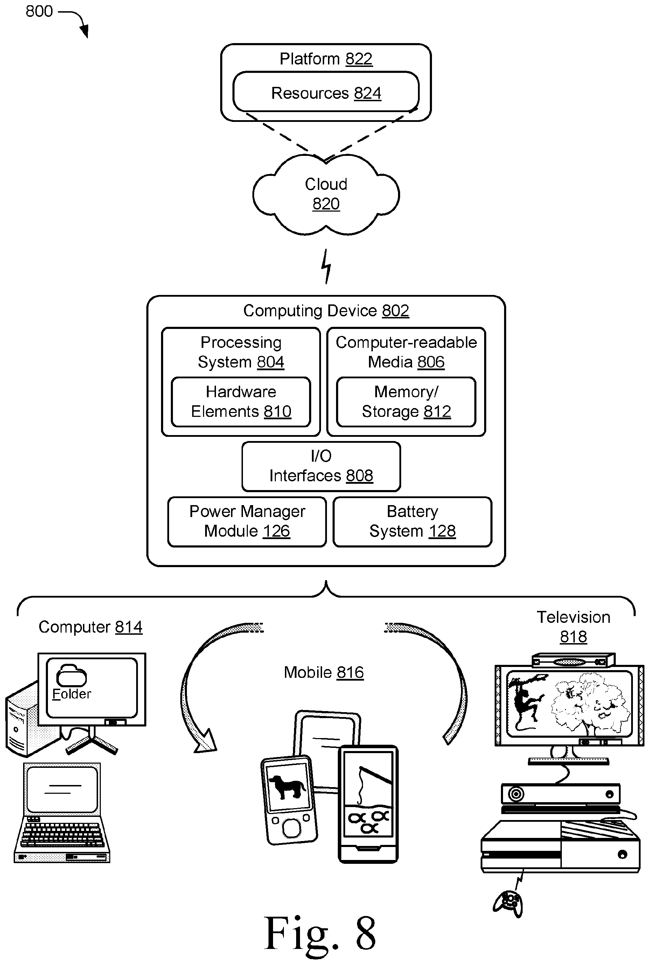

The computing device 102 can be embodied as any suitable computing system and/or device such as, by way of example and not limitation, a gaming system, a desktop computer, a portable computer, a tablet or slate computer, a handheld computer such as a personal digital assistant (PDA), a cell phone, a set-top box, a wearable device (e.g., watch, band, glasses, etc.), and the like. For example, as shown in Fig. 1 the computing device 102 can be implemented as a television client device 112, a computer 114, and/or a gaming system 116 that is connected to a display device 118 to display media content. Alternatively, the computing device may be any type of portable computer, mobile phone, or portable device 120 that includes an integrated display 122. A computing device may also be configured as a wearable device 124 that is designed to be worn by, attached to, carried by, or otherwise transported by a user. Examples of wearable devices 124 depicted in Fig. 1 include glasses, a smart band or watch, and a pod device such as clip-on fitness device, media player, or tracker. Other examples of wearable devices 124 include but are not limited to badges, a key fob, an access card, and a ring, an article of clothing, a glove, or a bracelet, to name a few examples. Any of the computing devices can be implemented with various components, such as one or more processors and memory devices, as well as with any combination of differing components. One example of a computing system that can represent various systems and/or devices including the computing device 102 is shown and described below in relation to Fig. 8.

The computer-readable media can include, by way of example and not limitation, all forms of volatile and non-volatile memory and/or storage media that are typically associated with a computing device. Such media can include ROM, RAM, flash memory, hard disk, removable media and the like. Computer-readable media can include both "computer-readable storage media" and "communication media," examples of which can be found in the discussion of the example computing system of Fig. 8.

The computing device 102 may also include a power manager module 126 and a battery system 128 that operate as described above and below. The battery system 128 is configured to include multiple heterogeneous battery cells as discussed in greater detail below. The power manager module 126 and battery system 128 may be provided using any suitable combination of hardware, software, firmware, and/or logic devices. As illustrated, the power manager module 126 and battery system 128 may be configured as separate, standalone modules. In addition or alternatively, the power manager module 126 may also be configured as a module that is combined with the operating system 108 or implemented via a controller or other component of the battery system 128.

The power manager module 126 represents functionality operable to assess system-wide power management considerations and manage availability heterogeneous cells of the battery system 128, processors, and/or processing cores based on the assessment. In one or more implementations, the power manager module 126 may be configured to implement a switching policy established based on power management considerations to control the battery system 128. This may involve analyzing factors including but not limited to battery characteristics, battery charge levels/states, device power state, actual and expected workloads, thermal conditions, user presence, processor/core utilization, application context, device context, priority, contextual clues, and other suitable performance metrics that may be used to drive power management decisions at the system level. The power manager module 126 may be configured to apply the switching policy to adjust the performance of the battery system 128 based on the assessment of system-wide performance metrics and conditions, which is also referred to herein as analyzing an operational context for the device. Applying the switching policy may involve controlling modes of the battery system, cells states of battery cells and/or availability of heterogeneous battery cells included with a battery system 128. For example, the power manager module 126 is operable to communicate control signals or otherwise interact with the battery system 128 to direct operation of switching hardware to switch between heterogeneous battery cells to service the load in accordance with the switching policy and analysis of the operational context. Details regarding these and other aspects of heterogeneous battery cell switching are discussed in the following section.

The environment 100 further depicts that the computing device 102 may be communicatively coupled via a network 130 to a service provider 132, which enables the computing device 102 to access and interact with various resources 134 made available by the service provider 132. The resources 134 can include any suitable combination of content and/or services typically made available over a network by one or more service providers. For instance, content can include various combinations of text, video, ads, audio, multimedia streams, applications, animations, images, webpages, and the like. Some examples of services include, but are not limited to, an online computing service (e.g., "cloud" computing), an authentication service, web-based applications, a file storage and collaboration service, a search service, messaging services such as email and/or instant messaging, and a social networking service.

Having described an example operating environment, consider now example details and techniques associated with one or more implementations of heterogeneous battery cell switching.

### Heterogeneous Battery Cell Switching Details

To further illustrate, consider the discussion in this section of example devices, components, procedures, and implementation details that may be utilized to provide heterogeneous battery cell switching as described herein. In general, functionality, features, and concepts described in relation to the examples above and below may be employed in the context of the example procedures described in this section. Further, functionality, features, and concepts described in relation to different figures and examples in this document may be interchanged among one another and are not limited to implementation in the context of a particular figure or procedure. Moreover, blocks associated with different representative procedures and corresponding figures herein may be applied together and/or combined in different ways. Thus, individual functionality, features, and concepts described in relation to different example environments, devices, components, figures, and procedures herein may be used in any suitable combinations and are not limited to the particular combinations represented by the enumerated examples in this description.

### Example Device

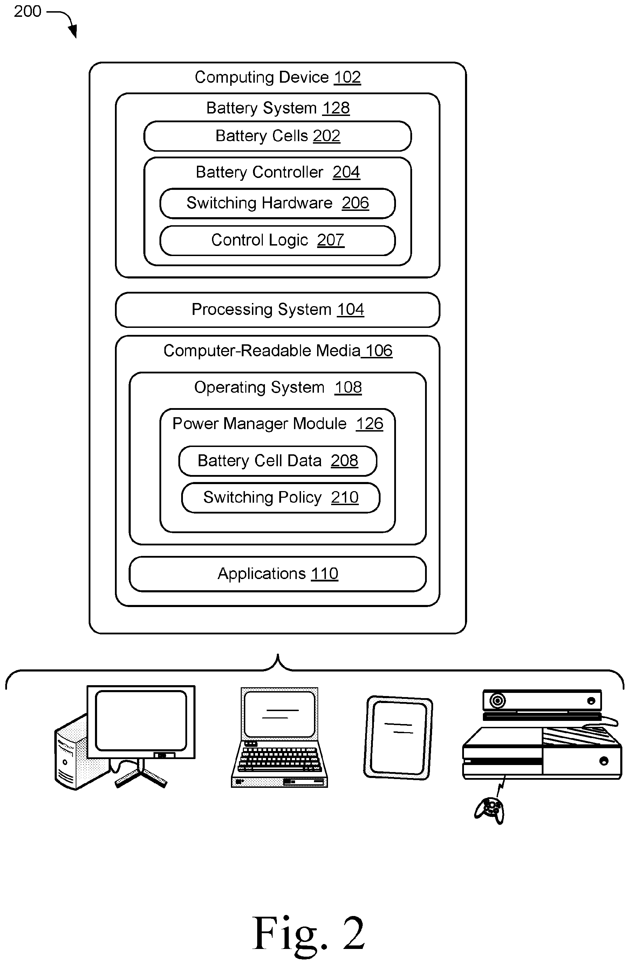

Fig. 2 depicts generally at 200 example details of a computing device 102 having a battery system 128 with heterogeneous battery cells in accordance with one or more implementations. Computing device 102 also includes processing system 104, computer readable media 106, operating system 108 and applications 110 as discussed in relation to Fig. 1. In the depicted example, a power manger module 126 is also shown as being implemented as a component of the operating system 108.

By way of example and not limitation, the battery system 128 is depicted as having battery cells 202 and a battery controller 204. The battery cells 202 are representative of various different kinds of cells that may be included with the computing device. As mentioned, battery cells 202 includes cells having different characteristics such as different sizes/capacities, chemistries, battery technologies, shapes, state of charge (SOC), and so forth. Accordingly, the battery system 128 includes a diverse combination of multiple battery cells at least some of which have different characteristics one to another. Various combinations of battery cells 202 may be utilized to provide a range of capacities, performance capabilities, efficiencies, and power usage characteristics that may be mapped to different end usage scenarios.

The battery controller 204 is representative of a control system to control operation of the battery system 128 and delivery of power from the battery cells 202 to service a system load. The battery controller 204 may be configured using various logic, hardware, circuitry, firmware, and/or software suitable to connect the battery cells 202 one to another, supply power to the system, switch between the battery cells, and so forth. By way of example and not limitation, the battery controller 204 in Fig. 2 is depicted as including switching hardware 206 and control logic 207 that is operable to selectively switch between use of different designated cells of the battery cells 202 at different times. Control logic 207 may reflect different switching modes supported by the system examples of which are discussed above and below. The switching mode may be set using the switching hardware 206 in accordance with a switching policy established based on power management assessment, which may include analysis of an operational content of the device. Thus, rather than merely interconnecting batteries in parallel or series, switching hardware 206 can be utilized to set-up a switching scheme to select different battery cells for different conditions/contexts. The switching hardware 206 may be employed to select one battery cell at a time to support the load as well as to cycle rapidly between two or more different batteries to draw a percentage of the overall load or a designated amount of current simultaneously from each battery being used to support the load. Accordingly, different cells of the heterogeneous battery cells may be activated to service the load in different operational contexts.

In one approach, switching between modes and/or use different battery cells occurs under the influence of the power manager module 126. As noted previously, the power manager module 126 is operable to manage availability heterogeneous cells of the battery system 128 analysis of factors indicative of an operational context and a switching policy. For example, an operational context may be assessed based at least upon battery cell data 208 that indicates the types of battery cells 202, characteristics of the cells, charge states, and so forth. The operational context may also represent a device state that reflects factors including the device power state, actual and expected workloads, load current requirements, thermal conditions, user presence, processor/core utilization, application context, and other performance parameters. A mode or state for the battery system 128 may be selected and set based upon an operational context that is recognized through analysis of battery cell data 208 and other contextual factors and/or performance parameters for the device that are tracked via the power manger module 126.

Additionally, the power manger module 126 may be configured to implement a switching policy 210. The switching policy 210 specifies switching modes and corresponding battery cells of a heterogeneous battery system to utilize for different operational contexts. In other words, the switching policy 210 is designed to match battery cells 202 to different contexts and control when different cells of the heterogeneous battery system are used. When an operational context is recognized, the switching policy 210 is used to select a switching mode that matches the context from among multiple modes supported by the battery system. Then, a switch or other switching hardware 204 of the battery system is controlled to cause a switch to the switching mode that is selected. In this way, the power manger module 126 implements the switching policy 210 to make determination regarding which battery or batteries to draw power from, how much power to draw from each battery, and when to make switches between different modes and/or combinations of battery cells. By way of example and not limitation, the power manager module 126 and switching policy 210 are illustrated in Fig. 2 as being implemented as components of an operating system 108. Other implementations as components of the operating system 108 or otherwise are also contemplated.

By switching between different kinds of batteries in the manner described herein, battery cells 202 utilized for a given time period may be tailored to tasks performed during the time period. Depending upon load requirements and other factors, power and battery life may be conserved in scenarios that can tolerate power throttling and battery cells 202 may be managed to achieve a high level of performance in other "priority" scenarios that demand low latency and/or substantial power. As such, a balance can be achieved between efficient use of power, latency, battery life, and utilization of multiple cells by selectively switching between battery cells 202 and/or corresponding modes using the techniques discussed herein. For example, relatively small and efficient battery cells may be utilized to service loads for operational context that are associated with low priority tasks and load requirements. On the other hand, larger capacity battery cells or a combination of multiple smaller batteries may be activated for ongoing or expected tasks that are assigned high priority and/or are associated with relatively high load requirements. Accordingly, the switching hardware 206 of a battery system 128 having a diverse set of battery cells 202 enables switching of the load current among the different battery cells 202 in various ways to accommodate different operational contexts and scenarios.

### Example Battery Cell Arrangement

Generally speaking, a battery system 128 having multiple diverse battery cells may be configured in various ways and employ a variety of different types of batteries. In one or more implementations, different battery cells 202 included with a system have different characteristics, such as differences in one or more of battery chemistry, capacity, voltage, size, shapes and/or state of charge (SOC), to name a few examples. Using different types of cells provide flexibility for design of the battery system and circuit boards, and consequently enables device developers to make better utilization of internal space to provide devices having increased battery life and efficiency. The different battery cells are arranged in a circuit that enables selective switching among the battery cells.

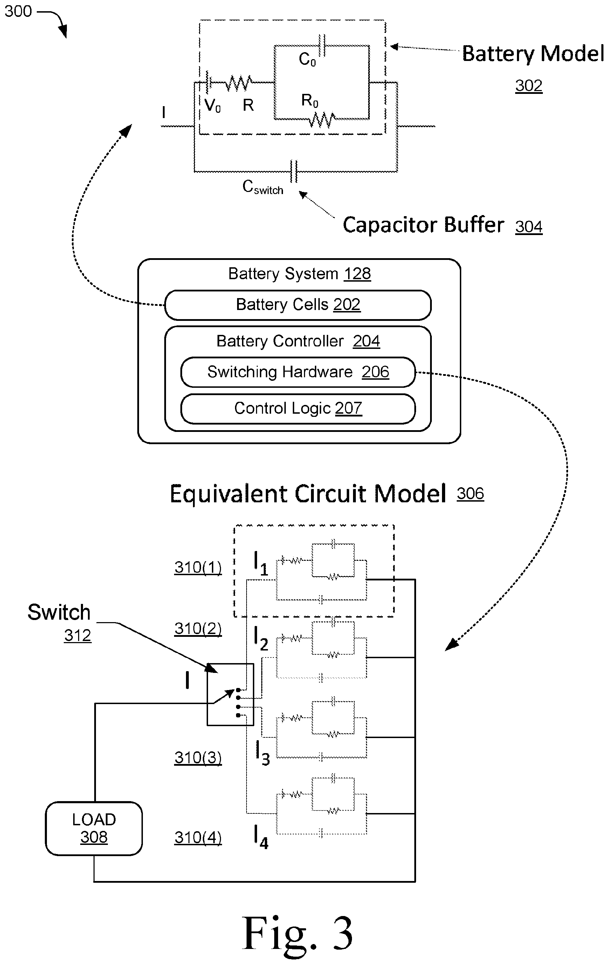

In particular, Fig. 3 depicts generally at 300 one illustrative example arrangement of a battery system 128 having multiple battery cells 202. The battery cells 202 may be connected in a circuit that includes a battery controller 204 that implements switching hardware 206 and control logic 207 to switch back and forth among the battery cells 202.

Each of the battery cells 202 may be represented according to a battery model 302 an example of which is depicted in Fig. 3. Each of the battery cells may also be coupled to a capacitor buffer 304, which is provided to smooth out the supplied power when the switching hardware 206 is employed to switch between cells. Although one illustrative example of a battery model 302 is shown in Fig. 3, it is to be appreciated that the concepts described herein are not limited to a particular model and various different models may be utilized, individually or in combination. Generally, multiple battery cells 202 are arranged together with switching hardware 206 that enables switching between the cells. The switching circuit may also include a mechanism to smooth the current draw from different cells, such as the example capacitor buffer 304 or other smoothing components. Additionally, the switching circuit includes control logic 207 or comparable functionality to designate and control which of cells are used to service the load, the mode of operation of the cells, and the amount of power that is drawn from each cell.

The battery controller 204 and switching hardware 206 may be configured to support multiple different modes of operation for battery cells 202. In one mode, the switching hardware 206 is controlled to select one battery cell at a time from which current is drawn to support the load. The particular cell that is selected for a given time period is dependent upon the operational context and switching policy. For example, below a relatively low current threshold such as twenty milliamps, a first low power, high efficiency battery cell may be selected via the switching hardware 206. Then, when the current threshold is exceeded (e.g., above twenty milliamps), the load may be switched to a second, higher performance battery cell by directing the switching hardware 206. In this mode, switching occurs at a relatively low frequency such that the load is serviced using a single battery cell at a time.

In another mode, the switching hardware 206 is controlled to cycle rapidly between two or more different battery cells to draw a percentage of the overall load current from each cell. In other words, the switching hardware 206 is cycled at a relatively high frequency to pull current from different batteries according to weighting assigned to each battery by the switching policy. Effectively, the rapid cycling in this mode enables servicing of the load by drawing different portions of load current from different cells at the same time. For example, for a battery system having three cells ten percent of the load may be drawn from a first cell, thirty percent from a second cell, and sixty percent from a third cell.

In yet another mode, the switching hardware 206 is controlled to cycle rapidly between or connect to two or more different battery cells to draw a specified amount of current at substantially the same time (e.g., simultaneously) from two or more battery cells being used to support the load. In this mode, the amount of current supplied by each cell is designated as opposed to setting percentages or weight factors. Again, rapid cycling in this mode enables servicing of the load by drawing different portions of load current from different cells at the same time, but in this case within constraints for the amount of current that is supplied from each cell. By way of example and not limitation, current up to a designated amount (e.g., ten milliamps) may be supplied by a first battery cell. Thereafter, an additional designated amount of current above the designated amount can be supplied by a second battery cell (e.g., the next twenty milliamps over ten milliamps). Additional load current above and beyond the first two amounts (e.g., above thirty milliamps) can be supplied by a third battery cell.

Fig. 3 further depicts an equivalent circuit model 306 for the battery system 128. In particular, the equivalent circuit model 306 represents switching hardware 206 that can be used to provide current I to a load 308 using an arrangement of multiple battery cells 202. In the depicted example, four different battery cells 310(1)-310(4) are connectable to the load 308 via a switch 312. The switch 312 may be implemented as a solid state switch or other suitable hardware switching device. The example battery cells 310(1)-310(4) represent different heterogeneous batteries configured to provide respective amounts of current I₁, I₂, I₃, and I₄. The load current I may be supplied using one or a combination of the battery cells 310(1)-310(4). To do so, the switch 312 may be controlled via the control logic 207 to service the load in accordance with a switching policy and/or under the influence of a power manger module 126 as described previously. The switch 312 is also used to implement the various different switching modes described above and below. For instance the switch 312 may be positioned to select one of the battery cells 310(1)-310(4) and service the load via the selected cell. The switch 312 may also be cycled rapidly to different positions associated with different cells to effectively draw a portion of the overall current I at the same time from each battery. In this approach, the overall current I is supplied by summing the currents I₁, I₂, I₃, and I₄ supplied from each cell. (e.g., I = I₁ + I₂, + I₃ + I₄). Portions of current obtained from each cell may be specified in various ways such as by associating percentages, weight factors, thresholds, or designated amounts with the cells.

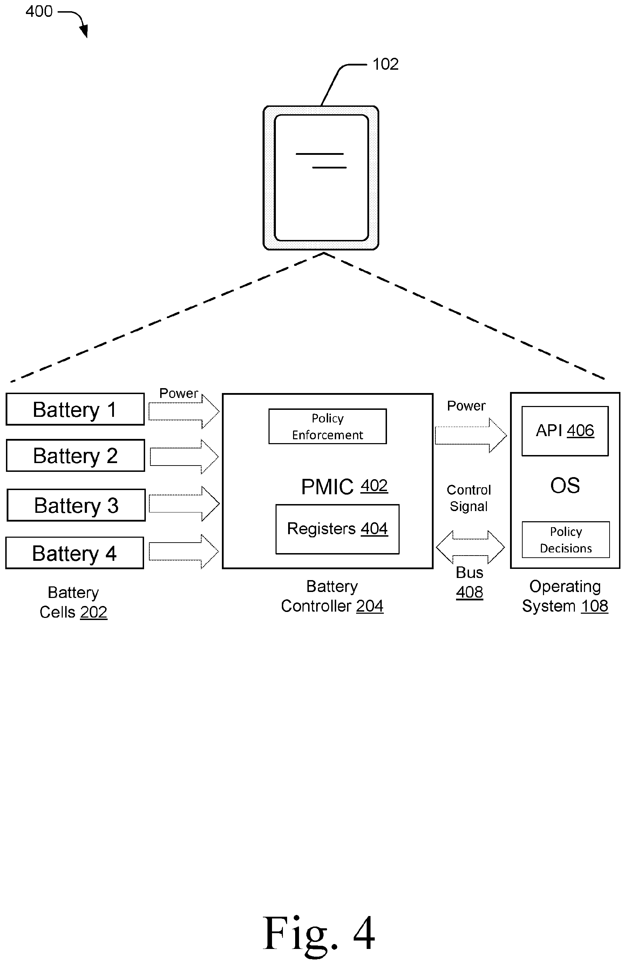

Fig. 4 depicts generally at 400 example details of a system having heterogeneous battery cells in accordance with one or more implementations. In particular, the example of Fig. 4 depicts a system having battery cells 202 that may be integrated with a computing device 102. Power is supplied via the battery cells using the techniques discussed herein, such as via a battery controller 204, which includes switching hardware 206 and control logic 207. In the depicted example, the battery controller 204 is implemented via a power management integrated circuit (PMIC) 402 that is adapted to support heterogeneous battery cell switching. For instance, in one or more implementations, the PMIC or other battery controller is adapted to included registers 404 to facilitate policy enforcement of a switching policy. The registers 404 may be configured to hold various parameters that the control logic 207 makes use of to control operation of switching hardware 206 and supply power from the battery cells accordingly. For example, registers 404 may include registers indicative of the switching policy, a selected switching mode, a timing register, and battery cell specific registers indicative of battery states, characteristics, and designated current switching constraints (amounts, weights, percentages, thresholds, etc.). Registers may be assigned default values selected for general usage in typically scenarios. Registers may then be selectively adapted under the influence the operating system and/or user input to implement policy settings for different use cases.

The registers 404 implemented by the battery controller are exposed to enable operating system 108 and/or application 110 level control over switching. In other words, the registers 404 provide user accessible control over heterogeneous battery cell switching. By way of example and not limitation parameter values for the registers 404 may be set and updated dynamically via an application programming interface (API) 406 that is exposed via the operating system 108 as represented in FIG. 4. API messages and or other control signals may be exchanged between the battery controller 204 and operating system over a suitable communication bus 408, one example of which is an I²C bus. Information regarding battery states, workload, and characteristics of battery cells 202 may also be communicated to the operating system 108 and/or power manager module 126 via the control signals and/or API to facilitate assessments of the operational context and policy decisions based on the operational context.

Thus, as represented in FIG. 4, the operating system 108, by way of a power manager module 126 or otherwise, may make policy decisions such as mode selection and battery cell constraints setting for battery switching. Policy decisions are made based upon performance parameters indicative of an operational context including at least information regarding battery states and characteristics obtained from the battery controller 204. The API 406 provides a mechanism by which control signals are communicated to the battery controller 204 to set the registers 404 in accordance with the policy decisions. Thus, the operating system 108 and/or power manager module 126 may direct operation of battery controller 204 to implement policy enforcement of a selected policy by setting the registers 404 and causing operation of switching hardware 206 to effectuate the modes and battery cell constraints specified by the policy. Power is then supplied to the system via one or more of the battery cells in accordance with the policy decisions.

### Example Procedures

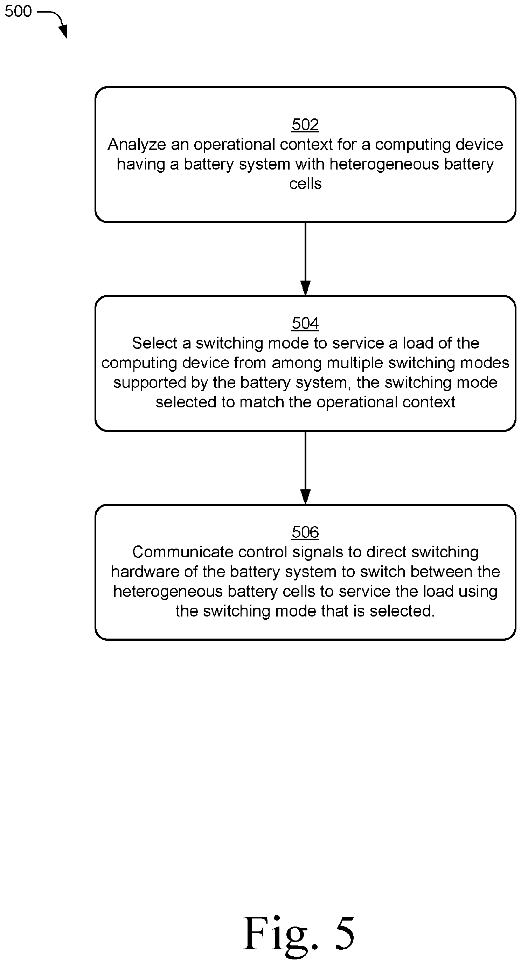

Further aspects of heterogeneous battery cell switching techniques are discussed in relation to example procedure of Figs. 5 to 7. The procedures described in this document may be implemented utilizing the environment, system, devices, and components described herein and in connection with any suitable hardware, software, firmware, or combination thereof. The procedures may be represented as a set of blocks that specify operations performed by one or more entities and are not necessarily limited to the orders shown for performing the operations by the respective blocks.

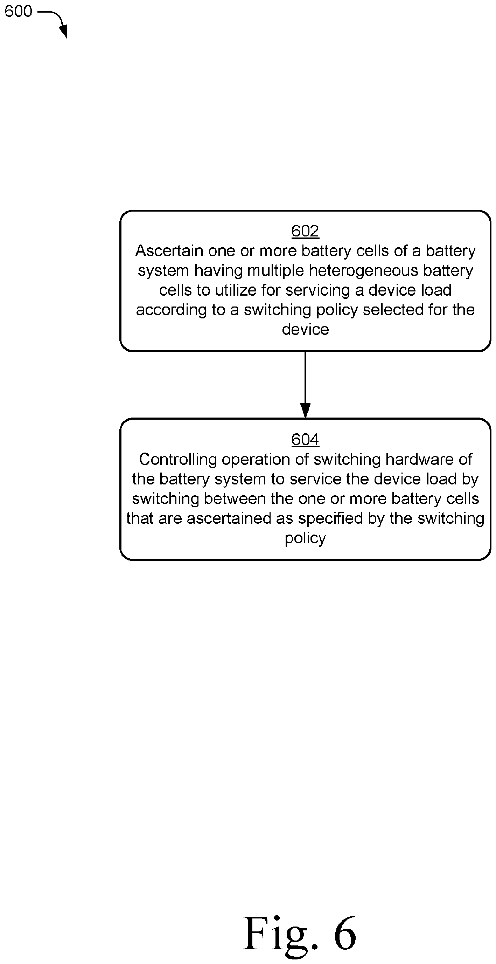

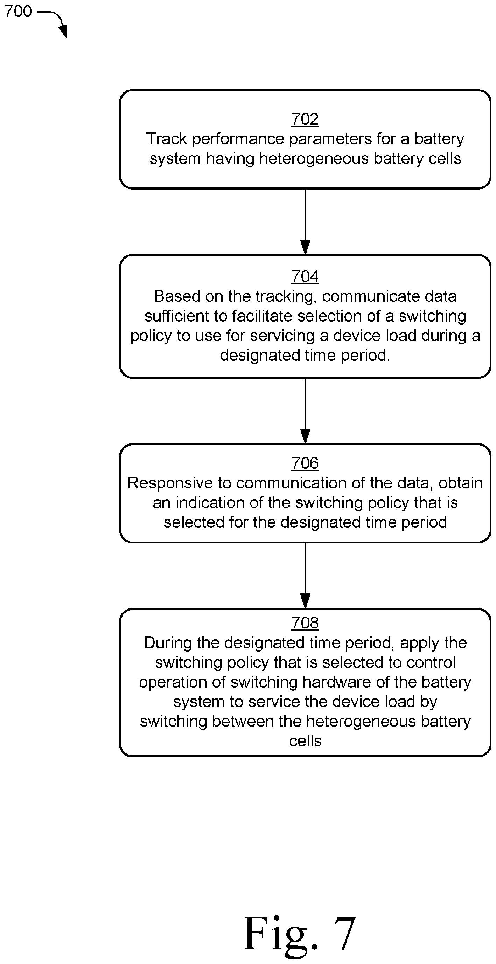

Fig. 5 is a flow diagram that describes details of an example procedure 500 for switching of heterogeneous battery cells in accordance with one or more implementations. The procedure 500 can be implemented by way of a suitably configured computing device, such as by way of an operating system 108, power manager module 126, and/or other functionality described in relation to the examples of Figs. 1-4. Individual operations and details discussed in relation to procedure 500 may also be combined in various ways with operations and details discussed herein in relation to the example procedures of Fig. 6 and Fig. 7.

An operational context for a computing device having a battery system with heterogeneous battery cells is analyzed (block 502). For example, an operating system 108 may be configured to assess performance parameters to recognize an operational context and make system wide power management decisions for a device based on the operational context. By way of example and not limitation, the operational context may reflect a combination of one or more of battery states, battery capabilities, the overall workload, workload distribution, thermal conditions, indications of user presence, power availability (e.g., battery level, power supply connection, etc.), application type, work categories, priority settings, and so forth. The assessments may be made via a power manager module 126 as described herein, or comparable functionality.

A switching mode is selected to service a load of the computing device from among multiple switching modes supported by the battery system, the switching mode selected to match the operational context (block 504). In particular, a mode may be selected based upon analysis of the operational context to make policy decisions as described previously. For instance, a switching policy 210 implemented by an operating system 108 may be configured to match different modes to operational contexts. Responsive to recognition of the operational context, the operating system 108 may be configured to apply the switching policy 210 to select a mode that is mapped to the recognized operational context. Various switching modes are contemplated, examples of which were previously described. The switching policy 210 may reflect design decisions to strike a balance between performance and power usage. Moreover, the switching policy 210 may be configurable by developers and/or users to shift the balance more towards performance or more towards efficient power usage (e.g., extended battery life).

Control signals are communicated to direct switching hardware of the battery system to switch between the heterogeneous battery cells to service the load using the switching mode that is selected (block 506). For example, the operating system 108 may send commands via control signals to direct operation of a battery controller 204 to implement the switching policy 210 and/or a selected mode. This may involve dynamically updating registers 404 and/or causing corresponding changes in switching hardware 206 to select battery cells 202 to service the load current and operate the battery cells as specified by the switching policy 210 and/or selected mode. Accordingly, the control signals may be configured to cause the switching hardware to selectively activate and deactivate cells of the heterogeneous battery cells as specified by the switching mode that is selected.

Fig. 6 is a flow diagram that describes details of an example procedure 400 for controlling operation of switching hardware of a battery system in accordance with one or more implementations. The procedure 600 can be implemented by way of a suitably configured computing device, such as by way of a power manager module 126 and/or other functionality described in relation to the examples of Fig. 1-4. Individual operations and details discussed in relation to procedure 600 may also be combined in various ways with operations and details discussed herein in relation to the example procedures of Fig. 5 and Fig. 7.

One or more battery cells of a battery system having multiple heterogeneous battery cells to utilize for servicing a device load according to a switching policy selected for the device are ascertained (block 602). For example, a switching policy 210 established for a device may be utilized to make policy decisions in the manner described previously. This may involve identifying battery cells of a heterogeneous system to utilize for a particular operational context. The operational context may be assessed based upon analysis of various performance parameters and/or battery cell data. Different switching modes that indicate which of the cells to use and how to use the cells to service the load may be identified and selected based upon the switching policy 210 and policy decisions. Then, operation of switching hardware of the battery system is controlled to service the device load by switching between the one or more battery cells that are ascertained as specified by the switching policy (block 604). For instance, control signals to cause operation of switching hardware 206 and implement a policy and/or mode may be provide in any suitable way. In one approach, an API 406 may be invoked to communicate directives to set registers 404 of a battery controller as discussed previously. In addition or alternatively, controls signals may provide commands that are interpretable by a battery controller 204 to set the position of switch 312 as directed by the signals. Such signals may be communicated between a power manager module 126 and battery controller 204 via an I²C bus or other suitable communication bus. In any case, the control signals are configured to cause switching between the one or more battery cells as specified by the switching policy.

Fig. 7 is a flow diagram that describes details of an example procedure 700 for enforcement of a switching policy in accordance with one or more implementations. The procedure 700 can be implemented by way of a suitably configured device, such as by way of a battery controller 204, control logic 207 and/or other functionality described in relation to the examples of Figs. 1-4. Individual operations and details discussed in relation to procedure 700 may also be combined in various ways with operations and details discussed herein in relation to the example procedures of Fig. 5 and Fig. 6.

Performance parameters are tracked for a battery system having heterogeneous battery cells (block 702). Based on the tracking, data is communicated that is sufficient to facilitate selection of a switching policy to use for servicing a device load during a designated time period (block 704). For example, a battery controller 204 may be configured to track various parameters indicative of performance of a battery system 128 that is controlled via the battery controller. For example, the battery controller 204 may be configured to collect and store various battery cell data 208 that indicates the types of battery cells, characteristics of the cells, charge states, and so forth. The battery cell data 208 may be made accessible to a power manager module 126 or equivalent functionality to facilitate power management operations including policy decisions for battery switching. For example, at least some battery cell data 208 may be communicated for use by the power manager module 126, operating system, and/or other applications over suitable communication bus via an API.

Responsive to communication of the data, an indication is obtained indicative of the switching policy that is selected for the designated time period (block 706). During the designated time period, the switching policy that is selected is applied to control operation of switching hardware of the battery system to service the device load by switching between the multiple heterogeneous battery cells (block 708). For example, communication of the data by the battery controller 204 may initiate analysis of an operational context and selection of a switching policy by the power manager module 126 or otherwise in the manner discussed herein. A response may then be provided to the battery controller 204 that is configured to include an indication regarding the switching policy that is selected. For example, the response may be in the form of a control signal or API message that specifies settings for control logic 207 and/or registers 404 implemented by the battery controller 204. Dynamically setting of parameters reflected by the control logic 207 and/or registers 404 via such signals or messages provides a mechanism to direct operation of the battery controller 204 to implement a selected policy. This may include controlling operation of switching hardware 206 of the battery controller 204 to service the device load by switching between multiple heterogeneous battery cells. As noted, multiple cells may be operated in multiple different modes supported by the battery controller. At least some of the modes may be configured to switch back and forth between two or more cells to service the load by supplying a portion of the power from the two or more cells. Cells may also be used individually in some scenarios to service the load using a single one of the cells. The same switching circuit is employed to implement the multiple different modes and thereby provide access to heterogeneous battery cells, individually and in combinations of two or more cells.

### Example System

Fig. 8 illustrates an example system 800 that includes an example computing device 802 that is representative of one or more computing systems and/or devices that may implement the various techniques described herein. The computing device 802 may be, for example, a server of a service provider, a device associated with a client (e.g., a client device), an on-chip system, and/or any other suitable computing device or computing system.

The example computing device 802 as illustrated includes a processing system 804, one or more computer-readable media 806, and one or more I/O interfaces 808 that are communicatively coupled, one to another. Although not shown, the computing device 802 may further include a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 804 is representative of functionality to perform one or more operations using hardware. Accordingly, the processing system 804 is illustrated as including hardware elements 810 that may be configured as processors, functional blocks, and so forth. This may include implementation in hardware as an application specific integrated circuit or other logic device formed using one or more semiconductors. The hardware elements 810 are not limited by the materials from which they are formed or the processing mechanisms employed therein. For example, processors may be comprised of semiconductor(s) and/or transistors (e.g., electronic integrated circuits (ICs)). In such a context, processor-executable instructions may be electronically-executable instructions.

The computer-readable media 806 is illustrated as including memory/storage 812. The memory/storage 812 represents memory/storage capacity associated with one or more computer-readable media. The memory/storage 812 may include volatile media (such as random access memory (RAM)) and/or nonvolatile media (such as read only memory (ROM), Flash memory, optical disks, magnetic disks, and so forth). The memory/storage 812 may include fixed media (e.g., RAM, ROM, a fixed hard drive, and so on) as well as removable media (e.g., Flash memory, a removable hard drive, an optical disc, and so forth). The computer-readable media 806 may be configured in a variety of other ways as further described below.

Input/output interface(s) 808 are representative of functionality to allow a user to enter commands and information to computing device 802, and also allow information to be presented to the user and/or other components or devices using various input/output devices. Examples of input devices include a keyboard, a cursor control device (e.g., a mouse), a microphone for voice operations, a scanner, touch functionality (e.g., capacitive or other sensors that are configured to detect physical touch), a camera (e.g., which may employ visible or non-visible wavelengths such as infrared frequencies to detect movement that does not involve touch as gestures), and so forth. Examples of output devices include a display device (e.g., a monitor or projector), speakers, a printer, a network card, tactile-response device, and so forth. Thus, the computing device 802 may be configured in a variety of ways as further described below to support user interaction.

Various techniques may be described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques may be implemented on a variety of commercial computing platforms having a variety of processors.

An implementation of the described modules and techniques may be stored on or transmitted across some form of computer-readable media. The computer-readable media may include a variety of media that may be accessed by the computing device 802. By way of example, and not limitation, computer-readable media may include "computer-readable storage media" and "communication media."

"Computer-readable storage media" refers to media and/or devices that enable storage of information in contrast to mere signal transmission, carrier waves, or signals per se. Thus, computer-readable storage media does not include signal bearing media, transitory signals, or signals per se. The computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media may include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which may be accessed by a computer.

"Communication media" may refer to signal-bearing media that is configured to transmit instructions to the hardware of the computing device 802, such as via a network. Communication media typically may embody computer readable instructions, data structures, program modules, or other data in a modulated data signal, such as carrier waves, data signals, or other transport mechanism. Communication media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 810 and computer-readable media 806 are representative of instructions, modules, programmable device logic and/or fixed device logic implemented in a hardware form that may be employed in some embodiments to implement at least some aspects of the techniques described herein. Hardware elements may include components of an integrated circuit or on-chip system, an application-specific integrated circuit (ASIC), a field-programmable gate array (FPGA), a complex programmable logic device (CPLD), and other implementations in silicon or other hardware devices. In this context, a hardware element may operate as a processing device that performs program tasks defined by instructions, modules, and/or logic embodied by the hardware element as well as a hardware device utilized to store instructions for execution, e.g., the computer-readable storage media described previously.

Combinations of the foregoing may also be employed to implement various techniques and modules described herein. Accordingly, software, hardware, or program modules including the operating system 108, applications 110, power manager module 126, and other program modules may be implemented as one or more instructions and/or logic embodied on some form of computer-readable storage media and/or by one or more hardware elements 810. The computing device 802 may be configured to implement particular instructions and/or functions corresponding to the software and/or hardware modules. Accordingly, implementation of modules as a module that is executable by the computing device 802 as software may be achieved at least partially in hardware, e.g., through use of computer-readable storage media and/or hardware elements 810 of the processing system. The instructions and/or functions may be executable/operable by one or more articles of manufacture (for example, one or more computing devices 802 and/or processing systems 804) to implement techniques, modules, and examples described herein.

As further illustrated in Fig. 8, the example system 800 enables ubiquitous environments for a seamless user experience when running applications on a personal computer (PC), a television device, and/or a mobile device. Services and applications run substantially similar in all three environments for a common user experience when transitioning from one device to the next while utilizing an application, playing a video game, watching a video, and so on.

In the example system 800, multiple devices are interconnected through a central computing device. The central computing device may be local to the multiple devices or may be located remotely from the multiple devices. In one embodiment, the central computing device may be a cloud of one or more server computers that are connected to the multiple devices through a network, the Internet, or other data communication link.

In one embodiment, this interconnection architecture enables functionality to be delivered across multiple devices to provide a common and seamless experience to a user of the multiple devices. Each of the multiple devices may have different physical requirements and capabilities, and the central computing device uses a platform to enable the delivery of an experience to the device that is both tailored to the device and yet common to all devices. In one embodiment, a class of target devices is created and experiences are tailored to the generic class of devices. A class of devices may be defined by physical features, types of usage, or other common characteristics of the devices.

In various implementations, the computing device 802 may assume a variety of different configurations, such as for computer 814, mobile 816, and television 818 uses. Each of these configurations includes devices that may have generally different constructs and capabilities, and thus the computing device 802 may be configured according to one or more of the different device classes. For instance, the computing device 802 may be implemented as the computer 814 class of a device that includes a personal computer, desktop computer, a multi-screen computer, laptop computer, netbook, and so on.

The computing device 802 may also be implemented as the mobile 816 class of device that includes mobile devices, such as a mobile phone, portable music player, portable gaming device, a tablet computer, a multi-screen computer, and so on. The computing device 802 may also be implemented as the television 818 class of device that includes devices having or connected to generally larger screens in casual viewing environments. These devices include televisions, set-top boxes, gaming consoles, and so on.

The techniques described herein may be supported by these various configurations of the computing device 802 and are not limited to the specific examples of the techniques described herein. This is illustrated through inclusion of the power manager module 126 on the computing device 802. The functionality represented by power manager module 126 and other modules/applications may also be implemented all or in part through use of a distributed system, such as over a "cloud" 820 via a platform 822 as described below.

The cloud 820 includes and/or is representative of a platform 822 for resources 824. The platform 822 abstracts underlying functionality of hardware (e.g., servers) and software resources of the cloud 820. The resources 824 may include applications and/or data that can be utilized while computer processing is executed on servers that are remote from the computing device 802. Resources 824 can also include services provided over the Internet and/or through a subscriber network, such as a cellular or Wi-Fi network.

The platform 822 may abstract resources and functions to connect the computing device 802 with other computing devices. The platform 822 may also serve to abstract scaling of resources to provide a corresponding level of scale to encountered demand for the resources 824 that are implemented via the platform 822. Accordingly, in an interconnected device embodiment, implementation of functionality described herein may be distributed throughout the system 800. For example, the functionality may be implemented in part on the computing device 802 as well as via the platform 822 that abstracts the functionality of the cloud 820.

### Example Implementations

Example implementations of heterogeneous battery cell switching described herein include, but are not limited to, one or any combinations of one or more of the following examples:
Example 1. A method implemented by a computing device comprising: analyzing an operational context for a computing device having a battery system with heterogeneous battery cells; selecting a switching mode to service a load of the computing device from among multiple switching modes supported by the battery system, the switching mode selected to match the operational context; and communicating control signals to direct switching hardware of the battery system to switch between the heterogeneous battery cells to service the load using the switching mode that is selected.
Example 2. The method in any one or more of the examples in this section, wherein the heterogeneous battery cells include at least two cells having different characteristics including differences in at least one of size, capacity, battery technology, chemistry, shape or state of charge (SOC).
Example 3. The method in any one or more of the examples in this section, wherein the multiple switching modes include different modes operable to: connect one of the heterogeneous battery cells at a time to service the load; rapidly switch between the heterogeneous battery cells to service the load by drawing a percentage of the load from each heterogeneous battery cell; and simultaneously draw a set amount of current from each of the heterogeneous battery cells to service the load.
Example 4. The method in any one or more of the examples in this section, wherein analyzing the operational context includes tracking battery states, current battery workload, predicted future workload, thermal conditions, indications of user presence, and power availability.
Example 5. The method in any one or more of the examples in this section, wherein analyzing the operational context includes obtaining battery cell data communicated from a battery controller to facilitate power management operations and recognizing the operational context based at least in part upon the battery cell data.
Example 6. The method in any one or more of the examples in this section, wherein different modes of the multiple switching modes are mapped to different operational contexts
Example 7. The method in any one or more of the examples in this section, wherein the control signals are configured to cause the switching hardware to selectively activate and deactivate cells of the heterogeneous battery cells as specified by the switching mode that is selected.
Example 8. The method in any one or more of the examples in this section, wherein communicating the control signals comprises communicating messages to direct operation of a power management integrated circuit of the battery system to set registers of the power management integrated circuit to cause implementation of the switching mode that is selected.
Example 9. A battery system for a computing device comprising: heterogeneous battery cells; and a battery controller including: switching hardware operable to selectively draw power from the heterogeneous battery cells; and control logic to control the switching hardware in accordance with a switching policy established for the computing device to switch between the heterogeneous battery cells.
Example 10. A battery system as recited in any one or more of the examples in this section, wherein the battery controller is configured to support multiple different switching modes.
Example 11. A battery system as recited in any one or more of the examples in this section, wherein the switching hardware includes a solid state switch that is positionable to select between the heterogeneous battery cells and a capacitor buffer associated with each of the heterogeneous battery cells to smooth current produced when switching between the heterogeneous battery cells.
Example 12. A battery system as recited in in any one or more of the examples in this section, wherein the switching hardware is configured to rapidly switch among the heterogeneous battery cells to service a current load for the computing device by drawing a portion of the load from each heterogeneous battery cell.
Example 13. A battery system as recited in any one or more of the examples in this section, wherein the switching hardware is further configured to connect one of the heterogeneous battery cells at a time to service the current load
Example 14. A battery system as recited in any one or more of the examples in this section, wherein control of the switching hardware in accordance with a switching policy includes: tracking performance parameters for the heterogeneous battery cells of the battery system; based on the tracking, communicating data sufficient to facilitate selection of the switching policy to use for servicing a device load during a designated time period; responsive to communication of the data, obtain an indication of the switching policy that is selected for the designated time period; and during the designated time period, apply the switching policy that is selected to control operation of the switching hardware to service the device load by switching between the heterogeneous battery cells.
Example 15. A battery system as recited in any one or more of the examples in this section, wherein the battery controller is adapted to included registers configured to hold various parameters used by the control logic to control operation of switching hardware including registers indicative of at least a selected switching policy and battery specific constraints designated for the heterogeneous battery cells.
Example 16. A computing device comprising: a battery system having heterogeneous battery cells; and a control system configured to implement a policy for switching a load for the device between the heterogeneous battery cells using multiple switching modes including different modes operable to: connect one of the heterogeneous battery cells at a time to service the load; rapidly switch among the heterogeneous battery cells to service the load by drawing a percentage of the load from each heterogeneous battery cell; and simultaneously draw a set amount of current from each of the heterogeneous battery cells to service the load.
Example 17. A computing device as recited in in any one or more of the examples in this section, wherein the battery system further includes a battery controller having switching hardware and control logic operable to selectively switch between use of different cells of the heterogeneous battery cells at different times.
Example 18. A computing device as recited in any one or more of the examples in this section, wherein the control system includes a power manager module of an operating system of the computing device configured to direct operation of the switching hardware to set the battery system into the multiple switching modes.
Example 19. A computing device as recited in any one or more of the examples in this section, wherein the power manager module is further configured to: obtain battery cell data communicated from the battery controller; recognize an operational context for the computing device based at least in part upon the battery cell data; select a mode of the multiple switching modes that matches the operational context; and communicate control signals to the battery controller to cause a switch by the switching hardware to operate the battery system using the mode that is selected.
Example 20. A computing device as recited in any one or more of the examples in this section, wherein the control signals are configured to cause a switch by setting values of registers implemented by the battery controller to indicate the mode that is selected and battery specific switching constraints designated for cells of the heterogeneous battery cells.

### Conclusion

Although the example implementations have been described in language specific to structural features and/or methodological acts, it is to be understood that the implementations defined in the appended claims are not necessarily limited to the specific features or acts described. Rather, the specific features and acts are disclosed as example forms of implementing the claimed features.

## Claims

1. A method implemented by a computing device comprising:
analyzing (502) an operational context for a computing device having a battery system with heterogeneous battery cells;
selecting (504) a switching mode to service a load of the computing device from among multiple switching modes supported by the battery system, the switching mode selected to match the operational context; and
communicating (506) control signals to direct switching hardware of the battery system to switch between the heterogeneous battery cells to service the load using the switching mode that is selected;
wherein the multiple switching modes include a mode operable to rapidly switch between the heterogeneous battery cells to service the load by drawing a percentage of the load from each heterogeneous battery cell.

2. The method of claim 1, wherein the heterogeneous battery cells include at least two cells having different characteristics including differences in at least one of size, capacity, battery technology, chemistry, shape or state of charge (SOC).

3. The method of claim 1, wherein the multiple switching modes further include different modes operable to:
connect one of the heterogeneous battery cells at a time to service the load; and
simultaneously draw a set amount of current from each of the heterogeneous battery cells to service the load.

4. The method of claim 1, wherein analyzing the operational context includes tracking battery states, current battery workload, predicted future workload, thermal conditions, indications of user presence, and power availability.

5. The method of claim 1, wherein analyzing the operational context includes obtaining battery cell data communicated from a battery controller to facilitate power management operations and recognizing the operational context based at least in part upon the battery cell data.

6. The method of claim 1, wherein different modes of the multiple switching modes are mapped to different operational contexts.

7. The method of claim 1, wherein the control signals are configured to cause the switching hardware to selectively activate and deactivate cells of the heterogeneous battery cells as specified by the switching mode that is selected.

8. The method of claim 1, wherein communicating the control signals comprises communicating messages to direct operation of a power management integrated circuit of the battery system to set registers of the power management integrated circuit to cause implementation of the switching mode that is selected.

9. The method of claim 1, wherein rapidly switching between the heterogeneous battery cells to service the load to draw a percentage of the load from each heterogeneous battery cell comprises cycling the switching hardware at a high frequency to pull current from different battery cells according to weighting assigned to each battery cell by a switching policy.

10. A battery system (128) for a computing device comprising:
heterogeneous battery cells (202); and
a battery controller including:
switching hardware (206) operable to selectively draw power from the heterogeneous battery cells; and
control logic (207) to control the switching hardware in accordance with a switching policy established for the computing device to switch between the heterogeneous battery cells;
wherein the switching hardware is configured to rapidly switch among the heterogeneous battery cells to service a current load for the computing device by drawing a portion of the load from each heterogeneous battery cell.

11. A battery system as recited in claim 10, wherein the switching hardware includes a solid state switch that is positionable to select between the heterogeneous battery cells and a capacitor buffer associated with each of the heterogeneous battery cells to smooth current produced when switching between the heterogeneous battery cells.

12. A battery system as recited in claim 10, wherein the switching hardware is further configured to connect one of the heterogeneous battery cells at a time to service the current load.

13. A computing device (102) comprising:
the battery system (128) of any of claims 10 to 12; and
a control system (108, 126) configured to implement a policy for switching a load for the device between the heterogeneous battery cells using multiple switching modes including different modes operable to:
connect one of the heterogeneous battery cells at a time to service the load;
rapidly switch among the heterogeneous battery cells to service the load by drawing a percentage of the load from each heterogeneous battery cell; and
simultaneously draw a set amount of current from each of the heterogeneous battery cells to service the load.

14. A computing device as recited in claim 13, wherein:
the control system includes a power manager module of an operating system of the computing device configured to direct operation of the switching hardware to set the battery system into the multiple switching modes.

15. A computing device as recited in claim 14, wherein the power manager module is further configured to:
obtain battery cell data communicated from the battery controller;
recognize an operational context for the computing device based at least in part upon the battery cell data;
select a mode of the multiple switching modes that matches the operational context; and
communicate control signals to the battery controller to cause a switch by the switching hardware to operate the battery system using the mode that is selected, the control signals configured to cause the switch by setting values of registers implemented by the battery controller to indicate the mode that is selected and battery specific switching constraints designated for cells of the heterogeneous battery cells.

## Patentansprüche

1. Verfahren, implementiert von einer Computereinrichtung, umfassend:
Analysieren (502) eines Betriebskontexts für eine Computereinrichtung, die ein Batteriesystem mit heterogenen Batteriezellen aufweist;
Auswählen (504) eines Schaltmodus zum Bedienen einer Last der Computereinrichtung aus mehreren Schaltmodi, die vom Batteriesystem unterstützt werden, wobei der Schaltmodus so ausgewählt ist, dass er zum Betriebskontext passt; und
Kommunizieren (506) von Steuersignalen zum Anweisen von Schalthardware des Batteriesystems, zwischen den heterogenen Batteriezellen umzuschalten, um die Last unter Verwendung des Schaltmodus zu bedienen, der ausgewählt ist;
wobei die mehreren Schaltmodi einen Modus einschließen, der betriebsfähig ist, zwischen den heterogenen Batteriezellen rapide umzuschalten, um die Last zu bedienen, indem ein prozentualer Anteil der Last aus jeder heterogenen Batteriezelle entnommen wird.

2. Verfahren nach Anspruch 1, wobei die heterogenen Batteriezellen mindestens zwei Zellen mit unterschiedlichen Eigenschaften einschließen, inklusive Unterschieden in zumindest einem von Größe, Kapazität, Batterietechnologie, Chemie, Form oder Ladezustand (SOC).

3. Verfahren nach Anspruch 1, wobei die mehreren Schaltmodi weiter verschiedene Modi einschließen, die betriebsfähig sind:
zum Verbinden einer der heterogenen Batteriezellen zur Zeit zum Bedienen der Last; und
zum gleichzeitigen Entnehmen einer eingestellten Strommenge aus jeder heterogenen Batteriezelle zum Bedienen der Last.

4. Verfahren nach Anspruch 1, wobei das Analysieren des Betriebskontexts ein Verfolgen von Batteriezuständen, gegenwärtiger Batterie-Arbeitsbelastung, vorhergesagter künftiger Arbeitsbelastung, thermischen Bedingungen, Angaben von Benutzerpräsenz und Leistungsverfügbarkeit einschließt.

5. Verfahren nach Anspruch 1, wobei das Analysieren des Betriebskontexts ein Beziehen von Batteriezellendaten, die von einer Batteriesteuerung kommuniziert werden, um Leistungs-Verwaltungsvorgänge zu vereinfachen, und ein Erkennen des Betriebskontexts zumindest teilweise auf Basis der Batteriezellendaten einschließt.

6. Verfahren nach Anspruch 1, wobei unterschiedliche Modi der mehreren Schaltmodi auf unterschiedliche Betriebskontexte abgebildet sind.

7. Verfahren nach Anspruch 1, wobei die Steuersignale so konfiguriert sind, dass sie veranlassen, dass die Schalthardware selektiv Zellen der heterogenen Batteriezellen aktiviert und deaktiviert, wie von dem Schaltmodus spezifiziert, der ausgewählt ist.

8. Verfahren nach Anspruch 1, wobei das Kommunizieren der Steuersignale ein Kommunizieren von Nachrichten umfasst, um den Betrieb einer Leistungsverwaltungs-Integrierten-Schaltung des Batteriesystems anzuweisen, Register der Leistungsverwaltungs-Integrierten-Schaltung einzustellen, um eine Implementation des Schaltmodus zu veranlassen, der ausgewählt ist.

9. Verfahren nach Anspruch 1, wobei das rapide Umschalten zwischen den heterogenen Batteriezellen zum Bedienen der Last zum Entnehmen eines prozentualen Anteils der Last von jeder heterogenen Batteriezelle ein Pendeln der Schalthardware bei einer hohen Frequenz umfasst, um Strom aus unterschiedlichen Batteriezellen zu entnehmen, gemäß einer Gewichtung, die jeder Batteriezelle von einer Schaltrichtlinie zugeordnet ist.

10. Batteriesystem (128) für eine Computereinrichtung, umfassend:
heterogene Batteriezellen (202); und
eine Batteriesteuerung, die einschließt:
Schalthardware (206), die zum selektiven Entnehmen einer Leistung aus den heterogenen Batteriezellen betriebsfähig ist; und
Steuerungslogik (207) zum Steuern der Schalthardware gemäß einer Schaltrichtlinie, die für die Computereinrichtung etabliert ist, um zwischen den heterogenen Batteriezellen umzuschalten;
wobei die Schalthardware konfiguriert ist, rapide zwischen den heterogenen Batteriezellen umzuschalten, um eine gegenwärtige Last für die Computereinrichtung zu bedienen, indem ein Teil der Last aus jeder heterogenen Batteriezelle entnommen wird.

11. Batteriesystem nach Anspruch 10, wobei die Schalthardware einen Festkörperschalter einschließt, der positionierbar ist, um zwischen den heterogenen Batteriezellen und einem Kondensatorpuffer auszuwählen, der zu jeder der heterogenen Batteriezellen gehört, um Strom zu glätten, der erzeugt wird, wenn zwischen den heterogenen Batteriezellen umgeschaltet wird.

12. Batteriesystem nach Anspruch 10, wobei die Schalthardware weiter konfiguriert ist zum Verbinden einer der heterogenen Batteriezellen zur Zeit zum Bedienen der gegenwärtigen Last.

13. Computereinrichtung (102), umfassend:
das Batteriesystem (128) nach einem der Ansprüche 10 bis 12; und
ein Steuersystem (108, 126) konfiguriert zum Implementieren einer Richtlinie zum Schalten einer Last für die Einrichtung zwischen den heterogenen Batteriezellen unter Verwendung von mehreren Schaltmodi inklusive unterschiedlichen Modi, betriebsfähig:
zum Verbinden einer der heterogenen Batteriezellen zur Zeit zum Bedienen der Last;
zum rapiden Umschalten zwischen den heterogenen Batteriezellen zum Bedienen der Last, indem ein prozentualer Anteil der Last aus jeder heterogenen Batteriezelle entnommen wird; und
zum gleichzeitigen Entnehmen einer eingestellten Strommenge aus jeder heterogenen Batteriezelle zum Bedienen der Last.

14. Computereinrichtung nach Anspruch 13, wobei:
das Steuersystem ein Leistungsverwaltungsmodul eines Betriebssystems der Computereinrichtung einschließt, das konfiguriert ist, einen Betrieb der Schalthardware anzuweisen, um das Batteriesystem in mehrere Schaltmodi zu versetzen.

15. Computereinrichtung nach Anspruch 14, wobei das Leistungsverwaltungsmodul weiter konfiguriert ist:
zum Beziehen von Batteriezellendaten, die von der Batteriesteuerung kommuniziert werden;
zum Erkennen eines Betriebskontexts für die Computereinrichtung zumindest teilweise auf Basis der Batteriezellendaten;
zum Auswählen eines Modus der mehreren Schaltmodi, der zum Betriebskontext passt; und
zum Kommunizieren von Steuersignalen an die Batteriesteuerung zum Veranlassen eines Schalters durch die Schalthardware zum Betreiben des Batteriesystems unter Verwendung des Modus, der ausgewählt ist, wobei die Steuersignale konfiguriert sind zum Veranlassen des Schalters durch Einstellen von Registerwerten, die von der Batteriesteuerung implementiert sind, zum Angeben des Modus, der ausgewählt ist, und batteriespezifischen Schalteinschränkungen, die für Zellen der heterogenen Batteriezellen designiert sind.

## Revendications

1. Procédé mis en oeuvre par un dispositif informatique comprenant :
l'analyse (502) d'un contexte opérationnel pour un dispositif informatique ayant un système de batterie avec des cellules de batterie hétérogènes ;
la sélection (504) d'un mode de commutation pour desservir une charge du dispositif informatique parmi plusieurs modes de commutation pris en charge par le système de batterie, le mode de commutation étant sélectionné pour correspondre au contexte opérationnel ; et
la communication (506) de signaux de commande pour amener un matériel de commutation du système de batterie à commuter entre les cellules de batterie hétérogènes afin de desservir la charge en utilisant le mode de commutation qui est sélectionné ;
dans lequel les différents modes de commutation incluent un mode utilisable pour commuter rapidement entre les cellules de batterie hétérogènes afin de desservir la charge en prélevant un pourcentage de la charge dans chaque cellule de batterie hétérogène.

2. Procédé selon la revendication 1, dans lequel les cellules de batterie hétérogènes incluent au moins deux cellules ayant des caractéristiques différentes, notamment des différences dans au moins un élément parmi la taille, la capacité, la technologie de batterie, la chimie, la forme ou l'état de charge (SOC).

3. Procédé selon la revendication 1, dans lequel les différents modes de commutation incluent en outre différents modes pouvant fonctionner pour :
relier une à la fois des cellules de batterie hétérogènes pour desservir la charge ; et
prélever simultanément une quantité définie de courant de chacune des cellules de batterie hétérogènes pour desservir la charge.

4. Procédé selon la revendication 1, dans lequel l'analyse du contexte opérationnel inclut le suivi des états de la batterie, de la charge de travail en cours de la batterie, de la charge de travail future prévue, des conditions thermiques, des indications de présence d'utilisateur et de disponibilité d'énergie.

5. Procédé selon la revendication 1, dans lequel l'analyse du contexte opérationnel inclut l'obtention de données de cellules de batterie communiquées par un dispositif de commande de batterie afin de faciliter les opérations de gestion d'alimentation et la reconnaissance du contexte opérationnel sur la base d'au moins en partie des données de cellule de batterie.

6. Procédé selon la revendication 1, dans lequel différents modes parmi les différents modes de commutation sont mis en correspondance avec différents contextes opérationnels.

7. Procédé selon la revendication 1, dans lequel les signaux de commande sont configurés pour amener le matériel de commutation à activer et à désactiver sélectivement des cellules parmi les cellules de batterie hétérogènes comme spécifié par le mode de commutation qui est sélectionné.

8. Procédé selon la revendication 1, dans lequel la communication des signaux de commande comprend la communication de messages pour amener le fonctionnement d'un circuit intégré de gestion d'alimentation du système de batterie à établir des registres du circuit intégré de gestion d'alimentation pour conduire à la mise en oeuvre du mode de commutation qui est sélectionné.

9. Procédé selon la revendication 1, dans lequel une commutation rapide entre les cellules de batterie hétérogènes pour desservir la charge afin d'extraire un pourcentage de la charge de chaque cellule de batterie hétérogène comprend une succession de cycles du matériel de commutation à une fréquence élevée pour extraire le courant de différentes cellules de batterie selon une pondération attribuée à chaque cellule de batterie par une stratégie de commutation.

10. Système de batterie (128) pour un dispositif informatique comprenant :
des cellules de batterie hétérogènes (202) ; et
un dispositif de commande de batterie comprenant :
un matériel de commutation (206) utilisable pour prélever sélectivement de l'énergie des cellules de batterie hétérogènes ; et
une logique de commande (207) pour commander le matériel de commutation conformément à une stratégie de commutation établie pour que le dispositif informatique commute entre les cellules de batterie hétérogènes ;
dans lequel le matériel de commutation est configuré pour commuter rapidement parmi les cellules de batterie hétérogènes afin de desservir une charge de courant pour le dispositif informatique en prélevant une partie de la charge de chaque cellule de batterie hétérogène.

11. Système de batterie selon la revendication 10, dans lequel le matériel de commutation inclut un commutateur à semi-conducteur pouvant être positionné pour choisir entre les cellules de batterie hétérogènes et un tampon de condensateur associé à chacune des cellules de batterie hétérogènes afin de lisser le courant produit lors de la commutation entre les cellules de batterie hétérogènes.

12. Système de batterie selon la revendication 10, dans lequel le matériel de commutation est en outre configuré pour relier l'une à la fois des cellules de batterie hétérogènes pour desservir la charge en cours.

13. Dispositif informatique (102) comprenant :
le système de batterie (128) selon l'une quelconque des revendications 10 à 12 ; et
un système de commande (108, 126) configuré pour mettre en oeuvre une stratégie pour commuter une charge pour le dispositif entre les cellules de batterie hétérogènes en utilisant plusieurs modes de commutation, notamment différents modes utilisables pour:
relier une à la fois des cellules de batterie hétérogènes pour desservir la charge ;
commuter rapidement entre les cellules de batterie hétérogènes pour desservir la charge en prélevant un pourcentage de la charge de chaque cellule de batterie hétérogène ; et
prélever simultanément une quantité définie de courant de chacune des cellules de batterie hétérogènes pour desservir la charge.

14. Dispositif informatique selon la revendication 13, dans lequel :
le système de commande comprend un module de gestion d'alimentation d'un système de fonctionnement du dispositif informatique configuré pour amener le fonctionnement du matériel de commutation à régler le système de batterie dans les différents modes de commutation.

15. Dispositif informatique selon la revendication 14, dans lequel le module de gestion d'alimentation est en outre configuré pour :
obtenir des données de cellules de batterie communiquées par le dispositif de commande de batterie ;
reconnaître un contexte opérationnel pour le dispositif informatique sur la base d'au moins en partie des données de la cellule de batterie ;
sélectionner un mode parmi les différents modes de commutation qui correspond au contexte opérationnel ; et
communiquer des signaux de commande au dispositif de commande de batterie pour provoquer une commutation par le matériel de commutation pour faire fonctionner le système de batterie en utilisant le mode qui est sélectionné, les signaux de commande étant configurés pour provoquer la commutation en réglant des valeurs de registres mis en oeuvre par le dispositif de commande de batterie afin d'indiquer le mode qui est sélectionné et des contraintes de commutation spécifiques à la batterie désignées pour des cellules parmi les cellules de batterie hétérogènes.
